## Europäisches Patentamt
## European Patent Office
## Office européen des brevets

(19)

(11) Veröffentlichungsnummer: **0 144 601**
**B1**

(12)

# EUROPÄISCHE PATENTSCHRIFT

(45) Veröffentlichungstag der Patentschrift:
10.06.87

(51) Int. Cl.⁴: **G 06 K 7/08**, H 03 K 17/97

(21) Anmeldenummer: **84111893.8**

(22) Anmeldetag: **04.10.84**

(54) Lesekopf zum magnetischen Abtasten von Wiegand-Drähten.

(30) Priorität: **10.11.83 DE 3340600**

(43) Veröffentlichungstag der Anmeldung:
**19.06.85 Patentblatt 85/25**

(45) Bekanntmachung des Hinweises auf die Patenterteilung:
**10.06.87 Patentblatt 87/24**

(84) Benannte Vertragsstaaten:
**FR GB**

(56) Entgegenhaltungen:
**EP-A-0 025 596**
**FR-A-2 266 918**
**FR-A-2 529 262**
**US-A-3 757 754**
**US-A-3 774 180**

(73) Patentinhaber: **DODUCO KG. Dr. Eugen Dürrwächter, Im Altgefäll 12 Postfach 480, D-7530 Pforzheim (DE)**

(72) Erfinder: **Normann, Norbert, Dr., Westendstrasse 3, D-7530 Pforzheim (DE)**

(74) Vertreter: **Twelmeier, Ulrich, Dipl.Phys., Patentanwälte Dr. Rudolf Bauer Dipl.-Ing.Helmut Hubbuch, Dipl.Phys. Ulrich Twelmeier Westliche Karl- Friedrich- Strasse 29-31, D-7530 Pforzheim (DE)**

## Beschreibung

Die Erfindung betrifft einen Lesekopf zum magnetischen Abtasten von Wiegand-Drähten. Sie geht aus von einem Lesekopf mit den im jeweiligen Oberbegriff der unabhängigen Patentansprüche 1 und 2 angegebenen Merkmalen. Ein solcher Lesekopf ist in der älteren Patentanmeldung DE-A-32 23 924, veröffentlicht am 5. Januar 1984, beschrieben. Er dient zum Lesen von Informationen, welche mittels Wiegand-Drähten oder dergl. magnetisch bistabilen Elementen binär kodiert sind.

Wiegand-Drähte sind in ihrer Zusammensetzung homogene, ferromagnetische Drähte (z.B. aus einer Legierung von Eisen und Nickel, vorzugsweise 48 % Eisen und 52 % Nickel, oder aus einer Legierung von Eisen und Kobalt, oder aus einer Legierung von Eisen mit Kobalt und Nickel, oder aus einer Legierung von Kobalt mit Eisen und Vanadium, vorzugsweise 52 % Kobalt, 38 % Eisen und 10 % Vanadium), die infolge einer besonderen mechanischen und thermischen Behandlung einen weichmagnetischen Kern und einen hartmagnetischen Mantel besitzen, d.h. der Mantel besitzt eine höhere Koerzitivkraft als der Kern. Wiegand-Drähte haben typisch eine Länge von 10 bis 50 mm, vorzugsweise von 20 bis 30 mm. Bringt man einen Wiegand-Draht, bei dem die Magnetisierungsrichtung des weichmagnetischen Kerns mit der Magnetisierungsrichtung des hartmagnetischen Mantels nach Sättigung des Wiegand-Drahtes in einem Magnetfeld mit einer Feldstärke von mindestens 80 A/cm, vorzugsweise mehr als 100 A/cm, übereinstimmt, in ein äußeres Magnetfeld, dessen Richtung mit der Richtung der Drahtachse übereinstimmt, der Magnetisierungsrichtung des Wiegand-Drahtes aber entgegengesetzt ist, dann wird bei Überschreiten einer Feldstärke von ca. 16 A/cm die Magnetisierungsrichtung des weichen Kerns des Wiegand-Drahtes umgekehrt.

Diese Umkehrung wird auch als Rückstellung bezeichnet. Bei erneuter Richtungsumkehr des äußeren Magnetfeldes kehrt sich die Magnetisierungsrichtung des Kerns bei Überschreiten einer kritischen Feldstärke des äußeren Magnetfeldes (welche man als Zündfeldstärke bezeichnet) erneut um, sodaß der Kern und der Mantel wieder parallel magnetisiert sind. Diese Umkehrung der Magnetisierungsrichtung erfolgt sehr rasch und geht mit einer entsprechend starken Änderung des magnetischen Kraftflusses pro Zeiteinheit einher (Wiegand-Effekt). Diese Änderung des Kraftflusses kann in einer Induktionswicklung, die als Sensorwicklung bezeichnet wird, einen kurzen und sehr hohen (ja nach Windungszahl und Belastungswiderstand der Induktionsspule bis zu ca. 12 Volt hohen) Spannungsimpuls induzieren (Wiegand-Impuls).

Auch beim Zurückstellen des Kerns wird in der Sensorwicklung ein Impuls erzeugt, allerdings mit wesentlich geringerer Amplitude und mit umgekehrtem Vorzeichen wie im Falle des Umklappens von der antiparallelen in die parallele Magnetisierungsrichtung. Liegt der Wiegand-Draht in einem Magnetfeld, dessen Richtung sich von Zeit zu Zeit umkehrt und welches so stark ist, daß es zuerst den Kern und danach auch den Mantel ummagnetisieren und jeweils bis in die magnetische Sättigung bringen kann, so treten Wiegand-Impulse infolge des Umklappens der Magnetisierungsrichtung des weichmagnetischen Kerns abwechselnd mit positiver und negativer Polarität auf und man spricht von symmetrischer Erregung des Wiegand-Drahtes. Dazu benötigt man Feldstärken von ca. -(80 bis 120 A/cm) bis +(80 bis 120 A/cm). Das Ummagnetisieren des Mantels erfolgt ebenfalls sprunghaft und führt ebenfalls zu einem Impuls in der Sensorwicklung, jedoch ist der Impuls wesentlich kleiner als der beim Umklappen des Kerns induzierte Impuls.

Wählt man jedoch als äußeres Magnetfeld ein solches welches nur in der Lage ist, den weichen Kern, nicht aber den harten Mantel in seiner Magnetisierungsrichtung umzukehren, dann treten die hohen Wiegand-Impulse nur mit gleichbleibender Polarität auf und man spricht von asymmetrischer Erregung des Wiegand-Drahtes. Dazu benötigt man in der einen Richtung eine Feldstärke von wenigstens 16 A/cm (für die Rückstellung des Wiegand-Drahtes) und in der umgekehrten Richtung eine Feldstärke von ca. 80 bis 120 A/cm.

Charakteristisch für den Wiegand-Effekt ist, daß die durch ihn erzeugten Impulse in Amplitude und Breite weitgehend unabhängig sind won der Änderungsgeschwindigkeit des äußeren Magnetfeldes und ein hohes Signal-zu-Rausch-Verhältnis aufweisen.

Für die Erfindung geeignet sind auch anders aufgebaute bistabile magnetischen Elemente, wenn diese zwei magnetisch miteinander gekoppelte Bereiche von unterschiedlicher Härte (Koerzitivkraft) besitzen und in ähnlicher Weise wie Wiegand-Drähte durch induziertes, rasch erfolgendes Umklappen des weichmagnetischen Bereichs zur Impulserzeugung verwendet werden können. So ist zum Beispiel aus der DE-A1-25 14 131 ein bistabiler magnetischer Schaltkern in Gestalt eines Drahtes bekannt, der aus einem hartmagnetischen Kern (z.B. aus Nickel-Kobalt), aus einer darauf abgeschiedenen, elektrisch leitenden Zwischenschicht (z.B. aus Kupfer) und aus einer hierauf abgeschiedenen weichmagnetischen Schicht (z.B. aus Nickel-Eisen) besteht. Eine andere Variante verwendet zusätzlich einen Kern aus einem magnetisch nicht leitenden metallischen Innenleiter (z.B. aus Beryllium-Kupfer), auf den dann die hartmagnetische Schicht, darauf die Zwischenschicht und darauf die weichmagnetische Schicht abgeschieden werden. Dieser bekannte bistabile magnetische Schaltkern erzeugt allerdings geringere Schaltimpulse als ein Wiegand-Draht.

Ein weiteres, ebenfalls zweischichtig aufgebautes, bistabiles magnetisches Element ist aus der Zeitschrift ELEKTRONIK 9, 6.5.1983, S. 105 u. 106 bekannt.

Mit Wiegand-Drähten lassen sich Informationen dadurch binär kodieren, daß man zwei Folgen von untereinander parallelen Wiegand-Drähten auf einem Träger vorsieht, und zwar in der Weise, daß die beiden Folgen in Längsrichtung der Wiegand-Drähte gegeneinander versetzt sind, und daß einem Wiegand-Draht in der einen Folge eine Lücke in der anderen Folge von Wiegand-Drähten entspricht. Bewegt man den Träger mit den beiden Folgen von Wiegand-Drähten an einem Lesekopf vorbei bzw. bewegt man umgekehrt den Lesekopf an dem Träger vorbei, dann bewirkt jeder am Lesekopf vorbeibewegte Wiegand-Draht in einer Sensorwicklung des Lesekopfes einen elektrischen Impuls. Der Lesekopf unterscheidet dabei zwischen Impulsen aus der ersten und aus der zweiten Folge von Wiegand-Drähten und ordnet diesen die Werte "0" bzw. "1" zu.

Die für den angegebenen Zweck bekannten Leseköpfe arbeiten mit asymmetrischer Erregung der Wiegand-Drahte. Der in der eingangs erwähnten DE-A1-32 23 924 beschriebene Lesekopf verwendet als Kern für die elektrische Sensorwicklung ein E-förmiges Teil um dessen mittleren Schenkel die Sensorwicklung herumgelegt ist. Der Kern ist durch eine nichtmagnetische Zwischenschicht in zwei zueinander parallele, weichmagnetische, E-förmige Teilkerne unterteilt.

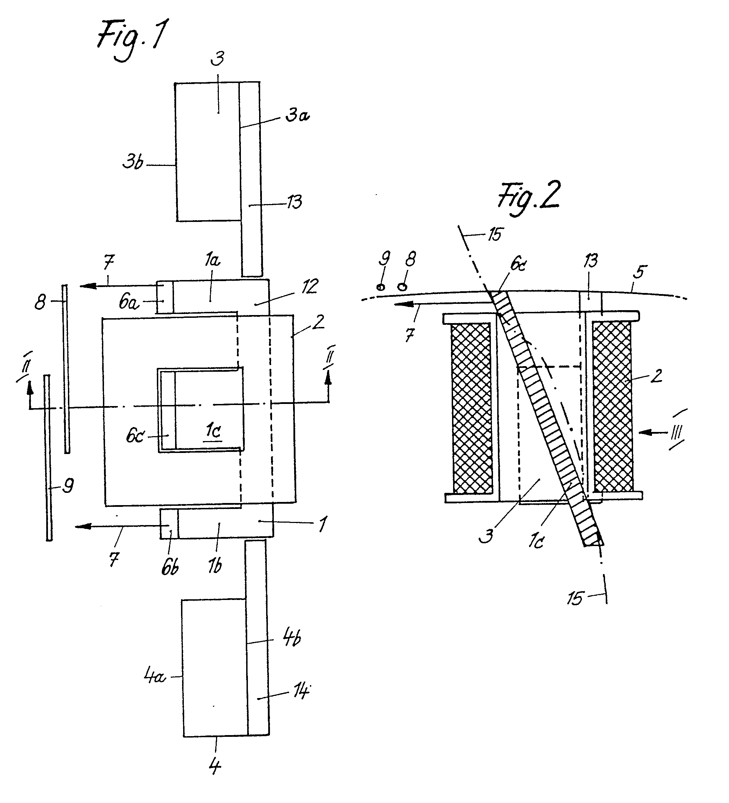

Der Abstand der drei Schenkel des E-Kerns voneinander und die Länge der Wiegand-Drähte in einem Träger sowie der Versatz der zwei Folgen von Wiegand-Drähten in diesem Träger werden beim Stand der Technik und auch bei Ausführung der vorliegenden Erfindung so aufeinander abgestimmt, daß dann, wenn man den Lesekopf mit zu den Wiegand-Drähten parallel liegendem E-Kern und den Wiegand-Drähten zugewandten Enden der Schenkel des E-Kerns am Träger mit den Wiegand-Drähten entlang bewegt, die beiden äußeren Schenkel das E-Kerns nahe den voneinander entfernt liegenden Enden der Wiegand-Drähte aus den beiden Folgen von Wiegand-Drähten liegen, während der mittlere Schenkel nahe den dazwischen liegenden, mittleren Enden der Wiegand-Drähte aus den beiden Folgen liegt (vergl. Fig. 1). Dies hat zur Folge, daß die mit der Ummagnetisierung eines Wiegand-Drahtes einhergehende kurzzeitige Änderung des magnetischen Kraftlusses zu Impulsen unterschiedlicher Polarität in der Sensorwicklung führt, jenachdem, welcher der beiden Folgen von Wiegand-Drähten der den Impuls auslösende Wiegand-Draht angehört.

Die zur Impulsauslösung erforderliche asymmetrische Erregung er Wiegand-Drähte erfolgt bei dem bekannten Lesekopf durch zwei kurze Dauermagnete, welche "oberhalb" des oberen Schenkels und "unterhalb" des unteren Schenkels des E-Kerns angeordnet sind und deren auf den Polflächen stehenden Normalen mit jener Ebene, in welcher die drei Schenl und der Rücken des E-Kerns liegen, einen zwischen 60° und 80° betragenden Winkel einschließen und parallel zu den Endflächen der drei Schenkel des E-Kerns liegen. (Die Bezeichnungen "oberhalb"und "unterhalb" beziehen sich auf eine Orientierung der Wiegand-Drähte in vertikaler Richtung). Durch die Schrägstellung wird erreicht, daß auf den beiden Seiten des E-Kerns entgegengesetzt gerichtete Magnetfelder unterschiedlicher Stärke bestehen, von denen das schwächere zur magnetischen "Rückstellung" und das entgegengesetzt gerichtete zur "Zündung" (die Zündung wird gelegentlich auch als Triggerung der Wiegand-Drähte bezeichnet) der Wiegand-Drähte ausgenutzt wird. Durch die beiden schräggestellten Dauermagnete werden die beiden E-förmigen Teilkerne in entgegengesetzten Richtungen magnetisiert; sie wirken somit als Flußleitstücke, welche den magnetischen Kraftfluß besonders an den Spitzen ihrer drei Schenkel konzentrieren, aber auch binden. Für die zusätzlich erforderliche Sättigung der Wiegand-Drähte in einem Magnetfeld, dessen Richtung mit dem zur Zündung erforderlichen Magnetfeld übereinstimmt, besitzt der bekannte Lesekopf einen weiteren Dauermagneten (auch als Sättigungsmagnet bezeichnet), welcher im Abstand von einigen Zentimetern (typisch 3 bis 4 cm) vom E-Kern entfernt angeordnet ist, damit die Felder des Sättigungsmagneten und der übrigen zwei Magnete einander nicht zu stark schwächen. Die Anordnung der Magnete ist dabei so gewählt, daß das die Rückstellung der Wiegand-Drähte bewirkende Magnetfeld zwischen den ihm entgegengesetzt gerichteten Magnetfeldern für die Sättigung und die Zündung der Wiegand-Drähte liegt, zwischen beiden gleichsam eingezwängt ist und die für eine magnetische Rückstellung der Wiegand-Drähte mindestens benötigte Feldstärke demgemäß nur in einem in Leserichtung vergleichsweise kurz bemessenen Bereich überschritten wird; eine Verlängerung dieses Bereichs wäre nur möglich, wenn man die Magnete auf größeren Abstand brächte, und damit eine größere Baulänge des Lesekopfes in Kauf nähme.

Bei dem bekannten Lesekopf ist aber gerade nachteilig, daß er in Leserichtung (das ist die Richtung, in welcher der Lesekopf an den Wiegand-Drähten oder die Wiegand-Drähte am Lesekopf vorbeibewegt werden) ohnehin eine große Baulänge von mindestens 5 cm aufweist, und daß er empfindlich gegen Änderungen des Abstands zwischen den Wiegand-Drähten und dem Lesekopf ist. Bereits Abstandsänderungen um wenige Zehntel Millimeter können zum Ausfall von Wiegand-Impulsen führen. Dies hat zur Folge, daß der bekannte Lesekopf auch empfindlich ist gegen ein Verkippen des Lesekopfes um eine zu den Wiegand-Drähten parallele Achse. Bei dem bekannten Lesekopf ist der zulässige Kippwinkeltoleranzbereich sehr klein.

Bereits eine geringe Verkippung des Lesekopfes kann zum Ausfall von Wiegand-Impulsen führen. Diese Anfälligkeit des bekannten Lesekopfes gegen Abstandänderungen und Verkippung bezüglich der Wiegand-Drähte steht seiner Verwendung als handgeführter Lesekopf entgegen, und die große Baulänge bedingt einen entsprechend langen Leseweg. Ein großer Leseweg ist z.B. nachteilig, wenn mit Wiegand-Drähten kodierte Karten zum Lesen in einen Schlitz eines Lesegerätes gesteckt werden müssen, denn dann müssen die Karten wenigstens um die Baulänge des Lesekopfes länger sein als die auf der Karte befindliche Folge von Wieganddrähten.

Die eingangs genannte DE-A1-32 23 924 beschreibt ferner einen Lesekopf für nur eine Zeile von Wiegand-Drähten. Dieser Lesekopf unterscheidet sich von jenen für zwei Zeilen von Wiegand-Drähten i.w. nur darin, daß anstelle eines E-förmigen Kerns ein U-förmiger Kern verwendet wird, dessen Joch die elektrische Wicklung trägt und dessen an die Arbeitsfläche reichenden Spitzen den Enden der vorbeigeführten Wiegand-Drähte zugewandt sind. Die Nachteile des vorbeschriebenen Lesekopfes mit E-förmigem Kern gelten in gleicher Weise auch für die entsprechenden Leseköpfe mit U-förmigem Kern.

Der Erfindung liegt die Aufgabe zugrunde, einen kompakten Lesekopf der eingangs genannten Art zu schaffen, der weniger empfindlich auf Änderungen seines Abstands von Wiegand-Drähten und auf eine Verkippung des Lesekopfes relativ zu den Wiegand-Drähten reagiert.

Diese Aufgabe wird gelöst durch einen Lesekopf mit den im Patentanspruch 1 angegebenen Merkmalen für das Abtasten von zwei Zeilen von Wiegand-Drähten und durch einen Lesekopf mit den im Patentanspruch 2 angegebenen Merkmalen für das Abtasten von nur einer Zeile von Wiegand-Drähten. Weiterbildungen der Erfindung sind Gegenstand der Unteransprüche.

Die Vorteile der Erfindung werden nachstehend am Beispiel des Lesekopfes mit E-förmigem Kern erläutert. Sie gelten in gleicher Weise für einen entsprechenden Lesekopf mit U-förmigem Kern.

Durch den neuartigen Lesekopfaufbau gelingt es, allein mit den beiden Dauermagneten, zwischen welchen der E-förmige Kern liegt, ohne Zuhilfenahme eines gesonderten Sättigungsmagneten an einem Ort vor der Arbeitsfläche des Lesekopfes eine so hohe Feldstärke zu erzeugen, welche ausreicht, um Wiegand-Drähte zu sättigen (also mindestens 80 A/cm), und an einem nahe benachbarten Ort vor der Arbeitsfläche des Lesekopfes ein entgegengesetzt gerichtetes Magnetfeld zu erzeugen, dessen Feldstärke ausreicht, einen zuvor magnetisch gesättigten Wiegand-Draht magnetisch zurückzustellen, d.h. mindestens den Wert 16 A/cm erreicht. Diese beiden Orte werden beim Lesevorgang von den Wiegand-Drähten passiert. Unter der Arbeitsfläche des Lesekopfes wird jene Oberfläche verstanden, zu welcher die Spitzen der drei Schenkel des E-förmigen Kerns führen und an welcher die Wiegand-Drähte beim Lesevorgang entlanggeführt werden. Der Ort, an welchem die Sättigungsfeldstärke erreicht und überschritten wird, liegt vor den in der Arbeitsfläche des Lesekopfes liegenden Rändern der Flußleitbleche, welche dort starke lokale Magnetpole bilden, und zwar so stark, daß die nötige Sättigungsfeldstärke nicht nur unmittelbar vor der Arbeitsfläche des Lesekopfes, sondern auch noch in einigem Abstand davon erreicht wird, sodaß der Lesekopf in dieser Beziehung nicht empfindlich auf kleinere Abstandsänderungen von den Wiegand-Drähten reagiert.

Der andere Ort, an welchem die Rückstellfeldstärke erreicht und überschritten wird, liegt im Streufeld der beiden nicht mit einem Flußleitblech belegten Polflächen der beiden Dauermagnete. Diese zwei nicht mit Flußleitblechen belegten Polflächen liegen hinter der Arbeitsfläche des Lesekopfes und in einigem Abstand vom oberen und unteren Schenkel des E-förmigen Kerns; da die Wiegand-Drähte bzw. der Lesekopf beim Lesevorgang so geführt werden, daß die Wiegand-Drähte mit ihren Enden jeweils vor zwei benachbarten Schenkeln des E-förmigen Kerns liegen (vergl. S. 6, Absatz 2), bedeutet dies, daß sie einerseits das starke lokale Magnetfeld vor den Flußleitblechen durchlaufen, aber andererseits zu den nicht mit Flußleitblechen belegten beiden Polflächen einen relativ großen Abstand aufweisen. Wegen dieses relativ großen Abstandes und weil das die magnetische Rückstellung bewirkende Magnetfeld von den relativ großen, nicht mit Flußleitblechen belegten Polflächen ausgeht, wird die nötige Rückstellfeldstärke in einem in Leserichtung relativ ausgedehnten Bereich erreicht und Änderungen des Abstandes der Wiegand-Drähte von der Arbeitsfläche sowie Verkippungen der Wiegand-Drähte relativ zur Leserichtung wirken sich deshalb weniger auf die Lesesicherheit aus als beim Stand der Technik, wo die Rückstellfeldstärke nur in einem in Leserichtung recht kurzen Bereich zwischen den entgegengesetzt gerichteten Magnetfeldern für die Sättigung und die Zündung der Wiegand-Drähte erreicht wird.

Der erfindungsgemäße Lesekopf wird beim Lesevorgang so geführt bzw. die Wiegand-Drähte werden beim Lesevorgang so geführt, daß sie als erstes das schwächere, für die magnetische Rückstellung der Wiegand-Drähte verantwortliche Magnetfeld durchqueren und danach die in der Arbeitsfläche des Lesekopfs liegenden Ränder der Flußleitstücke und das von

ihnen ausgehende starke, die Sättigung der Wiegand-Drähte ermöglichende Magnetfeld passieren. Ein jeder Wiegand-Draht wird also zunächst magnetisch zurückgestellt, anschließend nach Passieren des Nulldurchgangs der magnetischen Feldstärke in dem nun entgegengesetzt gerichteten Magnetfeld mit steil ansteigender Feldstärke gezündet und weiter bis in den Bereich magnetischer Sättigung getrieben. Durch die auf das Zünden oder Triggern des Wiegand-Drahtes folgende Sättigung ist er für eine weitere magnetische Rückstellung und Zündung bereit. Sollte einmal ein Wiegand-Draht vor einer Rückstellung nicht hinreichend gesättigt gewesen sein oder einer unkontrollierten magnetischen Beeinflussung ausgesetzt gewesen sein, welche die Wirkung der vormaligen Sättigung zunichte gemacht hat, dann kann man das einfach dadurch beheben, daß man den Wiegand-Draht, nachdem er beim ersten Lesevorgang nicht korrekt gezündet hat, ein weiteres Mal am Lesekopf vorbeibewegt: nun wird er sicher zünden, da er beim ersten - nicht ordnungsgemäßen - Lesevorgang auf jeden Fall gesättigt wurde. Ausgefallene Wiegand-Impulse lassen sich innerhalb einer kodierten Impulsfolge durch eine Prüfschaltung ohne Schwierigkeiterkennen und wenn dieser Fall eintritt, kann die Prüfschaltung ein Signal abgeben, welches zur Wiederholung des Lesevorgangs auffordert.

Mit dem erfindungsgemäßen Aufbau für einen Lesekopf ist es gelungen, die Baulänge des Lesekopfes in Leserichtung um 10 mm bis 20 mm zu verkürzen und auch dann noch eine sichere Zündung der Wiegand-Drähte zu erreichen, wenn deren Abstand von der Arbeitsfläche bis auf 2 mm anwächst und/oder die Wiegand-Drähte um Winkel bis zu ± 15° um eine zu den Wiegand-Drähten parallele Achse verkippt am Lesekopf entlang geführt werden. Damit sind alle Voraussetzungen für eine erfolgreiche Anwendung in handgeführten Lesern gegeben. Beim Einsatz des Lesekopfes in stationären Kartenlesern hat die deutlich verkürzte Baulänge den Vorteil, daß die mit Wiegand-Drähten bestückten Karten entsprechend verkürzt werden können oder bei gleichbleibender Kartenlänge die Folge der Wiegand-Drähte entsprechend verlängert und damit der Informationsgehalt vergrößert werden kann.

Als Magnete eignen sich für die Erfindung wegen der mit ihnen erzielbaren hohen magnetischen Kraftflüsse vor allem solche aus Legierungen Seltener Erden mit Kobalt, insbesondere aus Kobalt-Samarium.

Die Spitzen der Schenkel des E-förmigen Kerns befinden sich bei dem erfindungsgemäßen Lesekopf im Nahbereich der neutralen Zone des zwischen den Dauermagneten bestehenden Magnetfeldes (Unter dem Nahbereich der neutralen Zone wird jener Bereich um den räumlichen Nulldurchgang der Feldstärke verstanden, in welchem die magnetische Feldstärke noch wesentlich geringer ist als die zur Sättigung des weichmagnetischen Materials, aus welchem der E-förmige Kern besteht, erforderliche Feldstärke). Da die Zündung der Wiegand-Drähte bei verhältnismäßig niedriger Feldstärke nach ihrem Durchgang durch eben diese neutrale Zone erfolgt, also ebenfalls noch im Nahbereich der neutralen Zone und damit nahe bei den Enden der Schenkel des E-förmigen Kerns, ist gewährleistet, daß die beim Zünden des Wiegand-Drahtes auftretende sprunghafte Änderung eines magnetischen Kraftflusses unmittelbar den weichmagnetischen, E-förmigen Kern beeinflußt, welcher die Kraftflußänderung weiter in die elektrische Wicklung (Sensorwicklung) einkoppelt, welche sich auf dem mittleren Schenkel des E-förmigen Kerns befindet. Am besten ist die Einkopplung der beim Zünden eines Wiegand-Drahtes auftretenden Kraftflußänderung natürlich, wenn sich die Spitzen der Schenkel des E-förmigen Kerns genau an jenem Ort der Arbeitsfläche des Lesekopfes befinden, vor welchem die Wiegand-Drähte gezündet werden.

Die in der Sensorwicklung erreichbare Impulsamplitude kann weiterhin dadurch wesentlich gesteigert werden, daß man durch eine Schrägstellung des E-förmigen Kerns im Lesekopf erreicht, daß dieser Kern sich nicht nur im Bereich der Arbeitsfläche des Lesekopfes, sondern insgesamt im Nahbereich der neutralen Zone des Magnetfeldes, also insgesamt im Einflußbereich einer möglichst geringen magnetischen Feldstärke befindet (Anspruch 3). Eine solche Anordnung ist vorteilhaft, weil sie eine Sättigung des E-förmigen Kerns durch das Magnetsystem vermeidet und somit die hohe Permeabilität des Kerns erhält. Beim Stand der Technik hingegen liegt der E-förmige Kern im Bereich starker Streufelder, welche ihn teilweise sättigen und dadurch weniger ansprechbar für weitere Kraftflußänderungen machen. Obendrein war es beim Stand der Technik nötig, den Kern wegen der Durchflutung durch zwei Magnetfelder mit entgegengesetzter Richtung durch eine nichtmagnetische Zwischenschicht zu unterteilen. Eine solche nicht-magnetische Zwischenschicht benötigt der Kern im erfindungsgemäßen Lesekopf nicht.

Grundsätzlich kann man durch entsprechende Formgebung der Flußleitbleche und des E-förmigen Kerns erreichen, daß die neutrale Zone des Magnetfelds den gesamten E-Kern durchzieht. Für die praktische Anwendung der Erfindung reicht es aber aus, die idealen Verhältnisse durch eine passende Orientierung und Zuordnung eines durch ebene Flächen begrenzten E-förmigen Kerns relativ zu den durch parallele, paarweise fluchtende Polflächen begrenzten und ebene Flußleitbleche tragenden Dauermagneten anzunähern, so wie das im Anspruch 3 angegeben ist. Die Verwendung ebenflächiger Bauteile erleichtert den Aufbau des Lesekopfes. Dabei werden die Magnete mit ihren Polflächen zweckmäßig - anders als beim Stand der Technik - im rechten Winkel zur Leserichtung orientiert, und der E-förmige Kern weist demgemäß einen von 90° verschiedenen Winkel zur Leserichtung auf. Die Leserichtung verläuft ihrerseits rechtwinklig zur Verbindungsgeraden der Spitzen der Schenkel des E-Kerns und parallel bzw. tangential zur Arbeitsfläche des Lesekopfes an dieser Stelle.

Ausführungsbeispiele der Erfindung sind schematisch in den beigefügten Zeichnungen dargestellt und werden nachfolgend beschrieben.

Figur 1 zeigt einen Lesekopf mit E-förmigem Kern in der Draufsicht auf die Arbeitsfläche,

Figur 2 zeigt den Schnitt II-II durch den Lesekopf aus Fig. 1,

Figur 3 zeigt die Seitenansicht III des Lesekopfes aus Fig. 1 und 2, und die

Figuren 4 - 6 sind Darstellungen entsprechend den Figuren 1 bis 3 eines Lesekopfes, welcher anstelle eines E-förmigen Kerns einen U-förmigen Kern aufweist.

In den Ausführungsbeispielen sind gleiche oder einander entsprechende Teile mit übereinstimmenden Bezugszahlen bezeichnet.

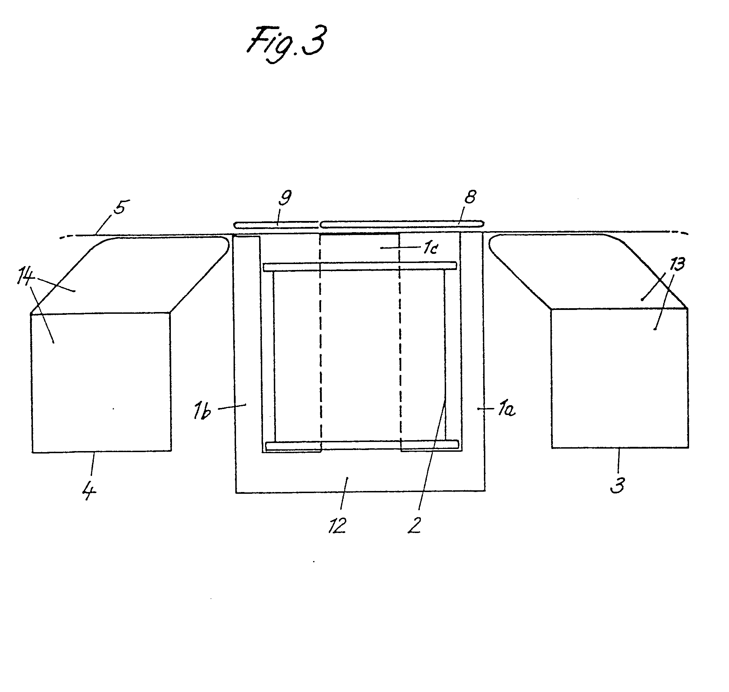

Der in den Fig. 1 - 3 dargestellte Lesekopf enthält in einem nicht dargestellten Gehäuse einen weichmagnetischen, E-förmigen Kern 1, um dessen mittleren Schenkel 1c eine elektrische Wicklung 2 (Sensorwicklung) herumgelegt ist, sowie zwei plattenförmige, also kurze Dauermagnete 3 und 4 mit relativ großen Polflächen. Die ganze Anordnung aus Kern 1, Wicklung 2 und Magneten 3 ist in einen Kunststoff, insbes. in ein Gießharz eingebettet und dadurch lagemäßig fixiert. Aus Gründen der Übersichtlichkeit ist der Kunststoff selbst nicht dargestellt, jedoch ist in Fig. 2 und in Fig. 3 die Lage der Arbeitsfläche 6 des Lesekopfs angedeutet, welche durch die Oberfläche der Einbettmasse aus Kunststoff gebildet wird und in welcher die Spitzen 6a, 6b und 6c der drei Schenkel 1a, 1b und 1c des E-förmigen Kerns liegen.

Die beiden Magnete 3 und 4 sind gleich groß, gleich stark und sind mit ihren Polflächen 3a und 3b bzw. 4a und 4b im rechten Winkel zur Leserichtung 7 angeordnet. Die Leserichtung 7 ist jene Richtung, in welche beim Lesevorgang der Lesekopf relativ zu den als ruhend angenommenen Wiegand-Drähten 8 und 9 geführt wird. Im rechten Winkel zur Leserichtung sind auch die Verbindungsgeraden der Spitzen 6a, 6b und 6c der drei Schenkel des E-förmigen Kerns 1 angeordnet; wie man jedoch am besten an Hand der Fig. 2 erkennen kann, weist der E-Kern als ganzes keinen rechten Winkel mit der Leserichtung 7 auf, d.h., die beiden Ebenen, in welchen die beiden Seitenflächen des E-förmigen Kerns 1 liegen, weisen einen von 90° verschiedenen Winkel mit der Leserichtung 7 auf. Die Spitzen 6a, 6b und 6c der drei Schenkel des E-förmigen Kerns 1 sind jedoch derart abgeschrägt, daß sie in der Flucht der Arbeitsfläche 5 liegen.

Die beiden Dauermagnete 3 und 4 sind in einigem Abstand unter der Arbeitsfläche 5 sowie - in Richtung quer zur Leserichtung 7 gemessen - in einigem Abstand von den Schenkeln 1a und 1b des E-förmigen Kerns 1 angeordnet. Die Anordnung ist so getroffen, daß in Blickrichtung parallel zur Arbeitsfläche 5, aber quer zur Leserichtung 7 die drei Schenkel 1a - 1c des E-förmigen Kerns 1 die beiden Magnete 3 und 4 ungefähr diagonal kreuzen (siehe Fig. 2).

Die beiden Magnete 3 und 4 sind relativ zueinander antiparallel orientiert, und beide tragen auf einer ihrer Polflächen 3a bzw. 4b je ein Flußleitblech 13 bzw. 14. Die Flußleitbleche befinden sich auf ungleichnamigen Polflächen 3a bzw. 4b der beiden Magnete und fluchten miteinander. Die ebenen Flußleitbleche 13 und 14 bedecken die jeweiligen Polflächen 3a bzw. 4b vollständig und führen won dem der Arbeitfläche 5 nächstliegenden Rand der Magnete 3 bzw. 4 bis zur Arbeitsfläche 5 des Lesekopfes und nähern sich dabei - in der Draufsicht auf die Arbeitsfläche gesehen, siehe Fig. 1 - den beiden äußeren Schenkeln 1a und 1b des E-förmigen Kerns bis auf einen geringen Abstand an. In Leserichtung 7 gemessen bleibt jedoch trotz dieser Annäherung zwischen den in der Arbeitsfläche 5 liegenden Enden der Flußleitbleche 13 und 14 und den Spitzen 6a und 6b des E-förmigen Kerns 1 ein beträchtlicher Abstand erhalten (siehe Fig. 2).

Die elektrische Wicklung 2 ist mit ihrer Längsachse im gezeichneten Beispiel senkrecht zur Arbeitsfläche 5 orientiert und schließt deshalb einen von 0 verschiedenen Winkel mit dem mittleren Schenkel 1c des E-förmigen Kerns ein, jedoch ist eine derartige Orientierung der Wicklung 2 nicht zwingend. Die Orientierung der elektrischen Wicklung 2 ist nicht erfindungswesentlich, sie könnte auch anders gewählt sein.

Der in den Fig. 1 bis 3 dargestellte Lesekopf dient zum Lesen einer Information, welche in zwei Zeilen von Wiegand-Drähten kodiert ist, von denen je ein Wiegand-Draht 8 bzw. 9 beispielsweise dargestellt ist. Die Länge der Wiegand-Drähte 8 und 9 und die Lage der Spitzen 6a, 6b und 6c des E-förmigen Kerns 1 sind so aufeinander abgestimmt, dass die Wiegand-Drähte 8 der einen Zeile mit ihren Enden über die Spitzen 6a und 6c und die Wiegand-Drähte 9 der anderen Zeile mit ihren Enden über die Spitzen 6c und 6b des E-förmigen Kerns 1 bewegt werden, wenn der Lesekopf in Leserichtung quer zu den Wiegand-Drähten 8 und 9 längs den Wiegand-Drahtteilen geführt wird.

Ein zuvor magnetisch gesättigter Wiegand-Draht gelangt beim Lesevorgang zunächst in das relativ weit ausgreifende Magnetfeld, welches zwischen den beiden Polflächen 3b und 4a aufgespannt ist und wird durch dieses magnetisch zurückgestellt. Im Bereich der Spitzen 6a und 6c bzw. 6b und 6c des E-förmigen Kerns 1 durchquert der Wiegand-Draht 8 bzw. 9 einen räumlichen Nulldurchgang der Feldstärke und gelangt dann in den Bereich des Magnetfeldes, welches zwischen den Polflächen 3a und 4b, welche mit den Flußleitblechen 13 und 14 belegt sind, aufgespannt ist und jenseits des räumlichen Nulldurchgangs der Feldstärke steil ansteigt. Kurz nach dem Passieren des Nulldurchgangs der Feldstärke wird der Wiegand-Draht 8 bzw. 9 gezündet und wird bis in die magnetische Sättigung getrieben, wenn er in den Bereich der Flußleitbleche 13 und 14 gelangt, zwischen denen ein starkes lokales Magnetfeld besteht. Durch diese dem Zünden folgende Sättigung ist der Wiegand-Draht 8 bzw. 9 sofort für einen weiteren Lesevorgang bereit.

Die beim Zünden des Wiegand-Drahtes auftretende plötzliche Änderung des magnetischen Kraftflusses bewirkt eine ebenso plötzliche Änderung des Magnetisierungszustandes des E-förmigen Kerns 1, und dieses führt in der Wicklung 2 zu einem elektrischen Impuls, dessen Polarität davon abhängt, ob der Wiegand-Draht, der gerade gezündet wurde, an den Schenkeln 1a und 1c oder an den Schenkeln 1b und 1c entlang bewegt wurde.

Infolge der Schrägstellung des E-förmigen Kerns relativ zu den beiden Dauermagneten 3 und 4 und durch die gewählte besondere Anordnung der Flußleitbleche 13 und 14 ist es gelungen, den E-förmigen Kern 1 insgesamt in einem Bereich mit relativ geringer magnetischer Feldstärke anzuordnen. Dies hat den Vorteil, daß die beim Zünden der Wiegand-Drähte auftretenden Änderungen des magnetischen Kraftflusses in einen weitgehend ungesättigten Kern eingekoppelt werden und deshalb zu hohen Signalamplituden führen.

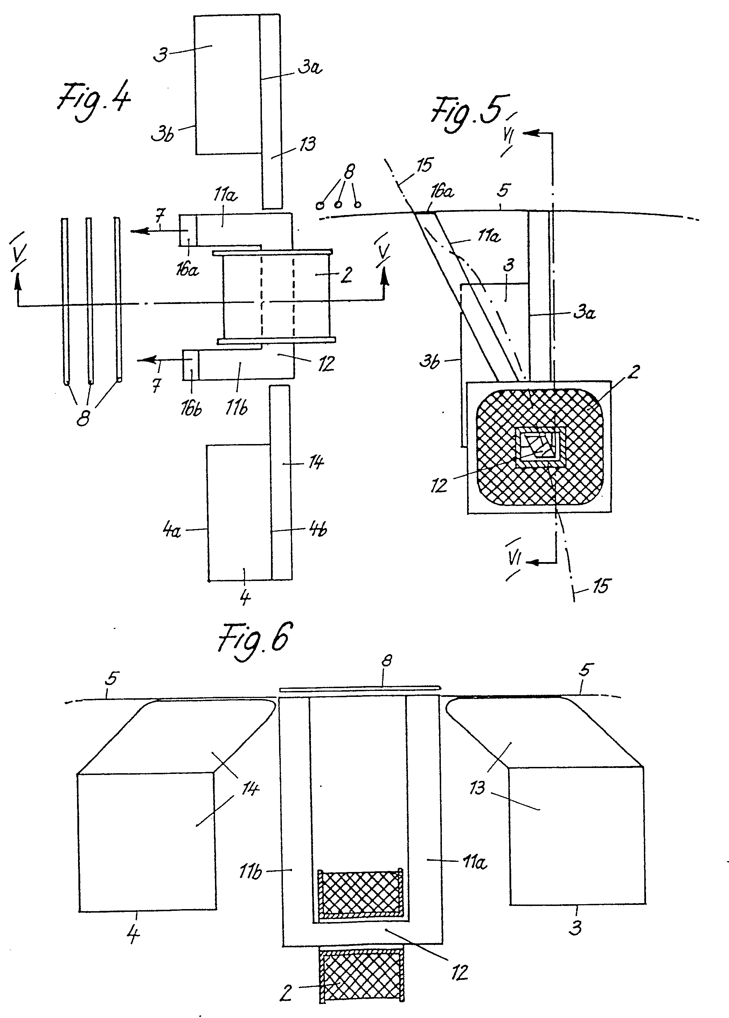

Das in den Fig. 4 bis 6 dargestellte Ausführungsbeispiel unterscheidet sich von jenem in den Fig. 1 bis 3 nur darin, daß statt eines E-förmigen Kernes 1 ein U-förmiger Kern 11 Verwendung gefunden hat, welcher auf seinem Joch 12 die erforderliche elektrische Wicklung 2 trägt. Ein solcher Lesekopf dient zum Lesen der Information, welche in einer einzelnen Zeile von Wiegand-Drähten 8 enthalten ist. Der Abstand der beiden Schenkel 11a und 11b des U-förmigen Kerns 11, dessen Spitzen 16a und 17a wiederum in der Arbeitsfläche 6 des Lesekopfes liegen, ist so auf die Länge der Wiegand-Drähte 8 abgestimmt, daß die Enden der Wiegand-Drähte beim Lesevorgang, wenn der Lesekopf im rechten Winkel zu den Wiegand-Drähten geführt wird, an den Spitzen 16a und 16b des Kerns 11 vorbeigeführt werden.

Bei einem solchen Lesekopf treten nur Impulse einer Polarität auf. Im übrigen entsprechen die Verhältnisse jenen im Beispiel der Fig. 1 bis 3.

## Patentansprüche

1. Lesekopf zum magnetischen Abtasten von zwei Zeilen von nebeneinander angeordneten, zueinander parallelen Wiegand-Drähten oder dergl. länglichen, bistabilen magnetischen Elementen,

welcher einen weichmagnetischen, E-förmigen Kern besitzt, bestehend aus drei zueinander parallelen Schenkeln, die mit ihren Spitzen an der Arbeitsfläche des Lesekopfes enden und an ihren anderen Enden durch ein hinter der Arbeitsfläche des Lesekopfs angeordnetes Joch miteinander verbunden sind und von denen der mittlere Schenkel von einer elektrischen Wicklung (Sensorwicklung) umgeben ist,

und welcher hinter seiner Arbeitsfläche eine Anordnung von zwei kurzen, gleichstarken und relativ große Polflächen besitzenden Dauermagneten besitzt, von denen einer mit Abstand oberhalb des oberen E-Schenkels und der andere mit Abstand unterhalb des unteren E-Schenkels liegt und beide eine zur Arbeitsfläche ungefähr parallele Magnetisierungsrichtung aufweisen,

wobei die Anordnung der Dauermagnete so getroffen ist, daß das zwischen ihnen bestehende Magnetfeld mit seiner zum Verlauf des Jochs des E-Kerns parallelen Komponente des Kraftflusses auf der einen Seite des E-förmigen Kerns entgegengesetzt gerichtet ist wie auf der anderen Seite des E-förmigen Kerns, dadurch gekennzeichnet, daß der eine Dauermagnet (3) auf seiner Nord-Polfläche (3a) und der andere Dauermagnet (4) auf seiner Süd-Polfläche (4b) ein Flußleitblech (13,14) trägt,

daß sich die Flußleitbleche (13, 14) unter Verringerung ihres in Richtung parallel zum Joch (12) gemessenen Abstandes voneinander auf einen ungefähr mit der Höhe des E-förmigen Kerns (1) übereinstimmenden Wert bis zur Arbeitsfläche (5) des Lesekopfes erstrecken, und daß in dieser Arbeitsfläche (5) die Spitzen (6a, 6b, 6c) der Schenkel (1a, 1b, 1c) des E-förmigen Kerns (1) derart mit Abstand von den Flußleitblechen (13, 14) angeordnet sind, daß sie sich im Nah-Bereich der neutralen Zone (15) des Magnetfeldes befinden.

2. Lesekopf zum magnetischen Abtasten einer Zeile von nebeneinander angeordneten, zueinander parallelen Wiegand-Drähten oder dergl. länglichen, bistabilen magnetischen Elementen, welcher einen weichmagnetischen, U-förmigen Kern besitzt, bestehend aus zwei zueinander parallelen Schenkeln, die mit ihren Spitzen an der Arbeitsfläche des Lesekopfs enden und an ihren anderen Enden durch ein hinter der Arbeitsfläche angeordnetes Joch miteinander verbunden sind, welches von einer elektrischen Wicklung (Sensorwicklung) umgeben ist, und welcher hinter seiner Arbeitsfläche eine Anordnung von zwei kurzen, gleich starken und relativ große Polflächen besitzenden Dauermagneten besitzt, von denen einer mit Abstand oberhalb des oberen U-Schenkels und der andere unterhalb des unteren U-Schenkels liegt und beide eine zur Arbeitsfläche ungefähr parallele Magnetisierungsrichtung aufweisen,

wobei die Anordnung der Dauermagnete so getroffen ist, daß das zwischen ihnen bestehende Magnetfeld mit seiner zum Verlauf des Jochs des U-förmigen Kerns parallelen Komponente des Kraftflusses auf der einen Seite des U-förmigen Kerns entgegengesetzt gerichtet ist wie auf der anderen Seite des U-förmigen Kerns, dadurch gekennzeichnet, daß der eine Dauermagnet (3) auf seiner Nord-Polfläche (3a) und der andere Dauermagnet (4) auf seiner Süd-Polfläche (4b) ein Flußleitblech (13, 14) trägt,

daß sich die Flußleitbleche (13, 14) unter Verringerung ihres in Richtung parallel zum Joch (12) gemessenen Abstandes voneinander auf einen ungefähr mit der Höhe des U-förmigen Kerns (11) Obereinstimmenden Wert bis zur Arbeitsfläche (5) des Lesekopfes erstrecken, und daß in dieser Arbeitsfläche (5) die Spitzen (16a, 16b) der Schenkel (11a, 11b) des U-förmigen Kerns (11) derart mit Abstand von den Flußleitblechen (13, 14) angeordnet sind, daß sie sich im Nah-Bereich der neutralen Zone (15) des Magnetfeldes befinden.

3. Lesekopf nach Anspruch 1 oder 2, dadurch gekennzeichnet, daß der E-förmige bzw. U-förmige Kern (1, 11) relativ zu den beiden Dauermagneten (3, 4) und ihren Flußleitblechen (13, 14) so angeordnet ist, daß er insgesamt im Nahbereich der neutralen Zone (15) des Magnetfeldes liegt.

4. Lesekopf nach Anspruch 3, dadurch gekennzeichnet, daß die plattenförmigen Dauermagnete (3, 4) mit ihren paarweise fluchtenden, ebenen Polflächen (3a, 3b; 4a, 4b) und mit ihren ebenen Flußleitblechen (13, 14) mit dem E-förmigen bzw. U-förmigen Kern (1, 11) einen von 0° verschiedenen Winkel einschließen und daß der E-förmige bzw. U-förmige Kern mit seinem Joch (12) ungefähr in der Flucht jener Polflächen (3a, 4b) liegt, welche mit den Flußleitblechen (13, 14) belegt sind.

5. Lesekopf nach einem der vorstehenden Ansprüche, dadurch gekenhzeichnet, daß die Dauermagnete (3, 4) mit ihren ebenen Polflächen (3a, 3b; 4a, 4b) im rechten Winkel zur Leserichtung angeordnet sind.

## Claims

1. A reading head for magnetically scanning two rows of juxtaposed parallel Wiegand wires or the like elongate bistable magnetic elements, which reading head comprises a soft magnetic E-shaped core consisting of three parallel legs, which have tips terminating on the working surface of the reading head and are interconnected at their other end by a yoke, which is disposed behind the working surface of the reading head, wherein the intermediate leg is surrounded by an electric winding (sensor winding), which reading head comprises behind its working surface an arrangement consisting of two short permanent magnets, which have the same strength and relatively large pole faces and one of which is spaced above the upper leg of the E and theother is spaced below the lower leg of the E and both of which have a magnetization in a direction which is approximately parallel to the working surface,

wherein the arrangement of the permanent magnets is such that that magnetic field existing between the permanent magnets has a flux component that is parallel to the direction of the yoke of the E-shaped core and said flux component on one side of the E-shaped core is directed opposite to said flux component on the other side of the E-shaped core, characterized in that respective flux-conducting sheets (13, 14) are carried by one permanent magnet (3) on its north pole face (3a) and by the other permanent magnet (4) on its south pole face (4b),

that the distance between the flux-conducting sheets (13, 14), measured parallel to the yoke (12) decreases to a value which is approximately as large as the height of the E-shaped core as they extend as far as to the working surface (5) of the reading head and that the tips (6a, 6b, 6c) of the legs (1a, 1b, 1c) of the E-shaped core (1) are disposed in said working surface (5) at such a distance from the flux-conducting sheets (13, 14) that said tips are disposed in the rear range of the neutral zone (15) of the magnetic field.

2. A reading head for magnetically scanning two rows of juxtaposed parallel Wiegand wires or the like elongate bistable magnetic elements, which reading head comprises a soft magnetic U-shaped core consisting of two parallel legs, which have tips terminating on the working surface of the reading head and are interconnected at their other end by a yoke, which is disposed behind the working surface of the reading head and is surrounded by an electric winding (sensor winding), which reading head comprises behind its working surface an arrangement consisting of two short permanent magnets, which have the same strength and relatively large pole faces and one of which is spaced above the upper leg of U and the other of which is spaced below the lower leg of the U and both of which have a magnetization in a direction which is approximately parallel to the working surface,

wherein the arrangement of the permanent magnets is such that that magnetic field existing between the permanent magnets has a flux component that is parallel to the direction of the yoke of the U-shaped core and said flux component on one side of the U-shaped core is directed opposite to said flux component on the other side of the U-shaped core,

that the distance between the flux-conducting sheets (13, 14), measured parallel to the yoke (12). decreases to a value which is approximately as large as the height of the U-shaped core as they extend as far as to the working surface (5) of the reading head and that the tips (16a, 16b) of the

legs (11a, 11b) of the U-shaped core (11) are disposed in said working surface at such a distance from the flux-conducting sheets (13, 14) that said tips (16a, 16b) are disposed in the near range of the neutral zone (15) of the magnetic field.

3. A reading head according to claim 1 or 2, characterized in that the E-shaped or U-shaped core (1, 11) is so arranged relative to the two permanent magnets (3, 4) and their flux-conducting sheets (13, 14) that said core is entirely disposed in the near range of the neutral zone (15) of the magnetic field.

4. A reading head according to claim 3, characterized in that the planar pole faces (3a, 3b; 4a, 4b) of the platelike permanent magnets (3, 4) are aligned in pairs and said pole faces as well as the planar flux-conducting sheets (13, 14) of said magnets include with the E-shaped or U-shaped core (1, 11) an angle which differs from zero degree and the yoke (12) of the E-shaped or U-shaped core is approximately aligned with those pole faces (3a, 4b) which are covered by the flux-conducting sheets (13, 14).

5. A reading head according to any of the preceding claims, characterized in that the planar pole faces (3a, 3b; 4a, 4b) of the permanent magnets (3, 4) extend at right angles to the reading direction.

**Revendications**

1. Tête de lecture pour l'exploration magnétique de deux lignes de fils Wiegand parallèles entre eux et disposés l'un à côté de l'autre, ou d'éléments magnétiques allongés bistables analogues, laquelle tête comporte un noyau en forme de E de coercitivité basse, constitué par trois branches parallèles entre elles qui se terminent avec leurs pointes sur la surface de travail de la tête de lecture et qui sont reliées ensemble à leurs autres extrémités par une âme transversale disposée derrière la surface de travail de la tête de lecture, la branche médiane étant entourée par un enroulement électrique (enroulement détecteur),

et laquelle tête de lecture comporte derrière sa surface de travail un agencement de deux courts aimants permanents de même force ayant des surfaces polaires relativement grandes, dont l'un est situé à une certaine distance au-dessus de la branche supérieure du E et à une certaine distance en dessous de la branche inférieure du E, les deux aimants ayant un sens de magnétisation approximativement parallèle à la surface de travail,

l'agencement des aimants permanents étant ici conçu de telle sorte que le champ magnétique existant entre eux a sa composante de flux de force parallèle à l'âme transversale du noyau en E orientée, sur un des côtés du noyau en E, en sens inverse du sens sur l'autre côté du noyau en E, caractérisé en ce que l'un des aimants permanents (3) porte sur sa surface polaire nord (3a) et l'autre aimant permanent (4) sur sa surface polaire sud (4b) une plaque métallique conductrice de flux (13, 14),

en ce que les plaques métalliques conductrices de flux (13, 14) s'étendent jusqu'à la surface de travail (5) de la tête de lecture, alors que leur écartement, mesuré dans un sens parallèle à l'âme transversale (12), se réduit à une valeur correspondant approximativement à la hauteur du noyau (1) en forme de E, et en ce que, dans cette surface de travail (5), les pointes (6a, 6b, 6c) des branches (1a, 1b, 1c) du noyau (1) en forme de E sont disposées à une certaine distance des plaques métalliques conductrices de flux (13, 14), de telle sorte qu'elles se trouvent à proximité de la zone neutre (15) du champ magnétique.

2. Tête de lecture pour l'exploration magnétique d'une ligne de fils Wiegand parallèles entre eux et disposés l'un à côté de l'autre, ou d'autres éléments analogues magnétiques, allongés, bistables, qui comporte un noyau en forme de U de coercitivité basse, constitué par deux branches parallèles entre elles qui se terminent avec leurs pointes sur la surface de travail de la tête de lecture et qui sont reliées ensemble à leurs autres extrémités par une âme transversale disposée derrière la surface de travail et entourée par un enroulement électrique (enroulement détecteur),

et qui comporte derrière sa surface de travail, un agencement de deux courts aimants permanents de même force, ayant des surfaces polaires relativement grandes, dont l'un est disposé à une certaine distance au dessus de la branche supérieure du U, et l'autre est disposé à une certaine distance en dessous de la branche inférieure du U, les deux aimants ayant un sens de magnétisation approximativement parallèle à la surface de travail,

l'agencement des aimants permanents étant conçu de telle sorte que le champ magnétique existant entre eux a sa composante de flux de force parallèle à l'âme transversale du noyau en forme de U orienté, sur un des côtés du noyau en forme de U, en sens inverse du sens sur l'autre côté du noyau en forme de U,

caractérisé en ce que l'un des aimants permanents (3) porte sur sa surface polaire nord (3a), et l'autre aimant permanent (4) sur sa surface polaire sud (4b) une plaque métallique conductrice de flux (13, 14),

en ce que les plaques métalliques conductrices de flux (13, 14) s'étendent jusqu'à la surface de travail (5) de la tête de lecture, alors que leur écartement mesuré dans un sens parallèle à l'âme transversale (12), se réduit à une valeur coïncidant approximativement avec la hauteur du noyau (11) en forme de U, et en ce que dans cette surface de travail (5) les pointes (16a, 16b) des branches (11a, 11b) du noyau (11) en forme de U sont disposées à une certaine distance des plaques métalliques conductrices de flux (13, 14) de telle sorte qu'elles se trouvent à proximité de la zone neutre (15) du champ magnétique.

**0 144 601**

3. Tête de lecture selon la revendication 1 ou 2, caractérisée en ce que le noyau en forme de E (1) ou en forme de U (11) est disposé par rapport aux deux aimants permanents (3, 4) et à leurs plaques métalliques conductrices de flux (13, 14) de telle sorte qu'il se trouve dans l'ensemble à proximité de la zone neutre (15) du champ magnétique.

4. Tête de lecture selon la revendication 3, caractérisée en ce que les aimants permanents (3, 4) en forme de plaques avec leurs surfaces polaires planes (3a, 3b; 4a, 4b) s'alignant par paires et avec leurs plaques métalliques conductrices de flux planes (13, 14), font avec le noyau en forme de E (1) ou le noyau en forme de U (11) un angle différent de 0°, et en ce que l'âme transversale (12) du noyau en forme de E (1) ou du noyau en forme de U (11), se trouve approximativement dans l'alignement des surfaces polaires (3a, 4b) qui sont recouvertes par les plaques métalliques conductrices de flux (13, 14).

5. Tête de lecture selon l'une des revendications précédentes, caractérisée en ce que les aimants permanents (3, 4) sont disposés avec leurs surfaces polaires (3a, 3b ; 4a, 4b) à angle droit par rapport au sens de lecture.

Fig.1

Fig.2

Fig.3

Fig.4

Fig.5

Fig.6

5